# EUROPÄISCHE PATENTSCHRIFT

(11) **EP 2 002 104 B1**
(45) Veröffentlichungstag und Bekanntmachung des Hinweises auf die Patenterteilung: **10.05.2017**
(21) Anmeldenummer: 07722095.2
(22) Anmeldetag: 23.03.2007
(51) Int. Cl.: F02F 3/00

(54) **OBERTEIL EINES GEBAUTEN KOLBENS**
UPPER PART OF AN ASSEMBLED PISTON
PIÈCE SUPÉRIEURE D'UN PISTON ASSEMBLÉ

(30) Priorität: 04.04.2006 DE 102006015587
(43) Veröffentlichungstag der Anmeldung: 17.12.2008
(73) Patentinhaber: MAHLE International GmbH, 70376 Stuttgart (DE)
(72) Erfinder: MESSMER, Dieter, 71686 Remseck (DE); GEISSLER, Christof, 72250 Freudenstadt (DE); SCHMIDT, Roland, 71522 Backnang (DE)
(74) Vertreter: BRP Renaud & Partner mbB Rechtsanwälte Patentanwälte Steuerberater
(86) Internationale Anmeldenummer: PCT/DE2007/000536
(87) Internationale Veröffentlichungsnummer: WO 2007/115528

(56) Entgegenhaltungen:
- WO-A-2005/121537
- DE-A1- 3 633 134
- DE-A1- 4 129 746

## Beschreibung

Die Erfindung betrifft ein Oberteil eines gebauten Kolbens nach dem Oberbegriff des Anspruches 1.

Aus der Patentschrift DE 36 33 134 C2 ist ein aus einem Oberteil und einem Unterteil bestehender, gebauter Kolben bekannt, bei dem zur Verringerung des Reibungsverschleißes der miteinander in Kontakt stehenden Flächen des Ober- und Unterteils zwischen diesen Flächen eine hochverschleißfeste Schicht angeordnet ist. Die Schicht wird nach dem Detonationsspritzverfahren auf eine der beiden Kontaktflächen aufgetragen, um eine gute Haftung der Schicht an der Kontaktfläche zu gewährleisten. Die Schicht kann aus einer Wolframkarbid-Kobalt-Logierung oder aus einer Kupfer-Nickel-Indium- Legierung bestehen. Dies bringt den Nachteil mit sich, dass sowohl die Materialien, aus denen die Schicht bestehen kann, als auch das Detonationsspritzverfahren sehr kostenaufwändig sind.

Diesen Nachteil des Standes der Technik zu vermeiden, ist Aufgabe der Erfindung. Gelöst wird diese Aufgabe mit den im Kennzeichen des Hauptanspruches stehenden Merkmalen, wobei es ein einfach zu realisierender und damit preisgünstiger Weg ist, zur Vermeidung des Verschleißes der Kontaktflächen des Oberteils und Unterteils eines gebauten Kolbens die Kontaktfläche des Oberteils mit einem rillenförmigen Profil zu versehen. Ein Kolbenoberteil mit auf seiner inneren Kontaktfläche konzentrisch angeordneten Nuten mit einer Tiefe von 10 bis 500 µm ist aus WO2005121537 bekannt, Einige Ausführungsbeispiele der Erfindung werden im Folgenden anhand der Zeichnungen beschrieben. Es zeigen
- Fig. 1: ein Oberteil eines Kolbens, das einen mittig angeordneten Gewindebolzen zum Verschrauben des Oberteiles mit dem Unterteil des Kolbens aufweist, und dessen zur Hälfte dargestellte Unteransicht, und
- Fig. 2: ein Oberteil eines Kolbens, das eine mittig angeordnete Sacklochbohrung mit Innengewinde zur Aufnahme einer Schraube aufweist, womit das Oberteil mit dem Unterteil des Kolbens verschraubt wird, und dessen zur Hälfte dargestellte Unteransicht.

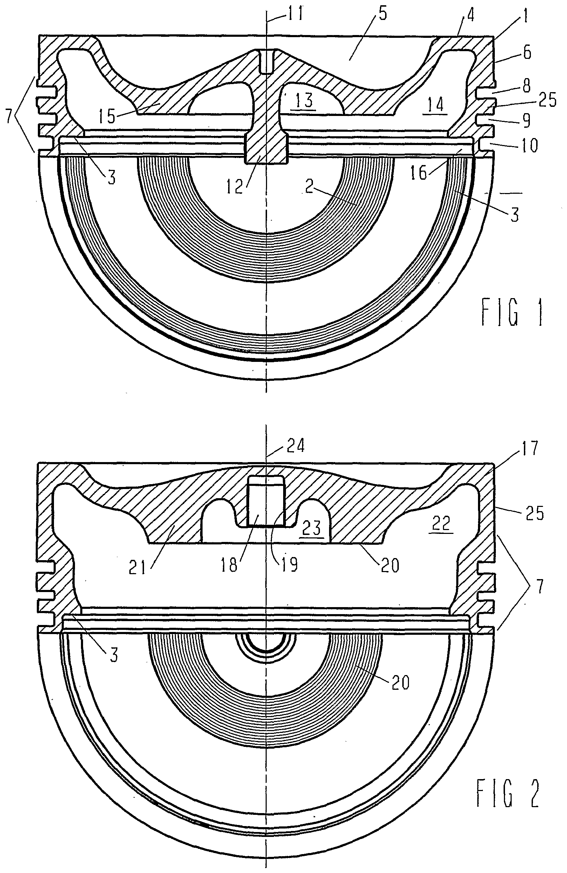

Fig. 1 zeigt ein Oberteil 1 eines Kolbens, dessen Unterteil in der Figur nicht dargestellt ist. Eingezeichnet ist in Fig. 1 zur Hälfte die Unteransicht des Oberteils 1, die eine innere, radial ausgerichtete Kontaktflächen 2 und eine äußere, radial ausgerichtete Kontaktfläche 3 zeigt, wobei das Oberteil 1 über die Kontaktflächen 2 und 3 auf dem Unterteil des Kolbens 1 aufliegt. Das Oberteil 1 ist aus Stahl hergestellt. Das Unterteil kann aus Stahl, aus Aluminium oder aus Gusseisen mit Kugelgraphit bestehen.

Das Oberteil 1 weist eine in seinen Kolbenboden 4 eingeformte Verbrennungsmulde 5 auf. Der kolbenbodenseitige Bereich der radialen Außenseite des Oberteils 1 ist als Feuersteg 6 ausgebildet, dem sich in kolbenbodenabgewandte Richtung eine Ringpartie 7 mit drei Ringnuten 8, 9 und 10 anschließt.

Die kolbenbodenabgewandte Unterseite des Oberteils 1 weist koaxial zur Kolbenachse 11 einen Gewindebolzen 12 auf, über den das Oberteil 1 mit dem Unterteil des Kolbens verschraubt ist. Konzentrisch zur Kolbenachse 11 und konzentrisch zueinander sind auf der Unterseite des Oberteils 1 eine radial innere, ringförmige Ausnehmungen 13 und eine radial äußere, ringförmige Ausnehmung 14 angeordnet, die gemeinsam mit kolbenbodenseitigen Ausnehmungen im Unterteil geschlossene Ringkanäle zum Durchleiten von Kühlöl bilden. Begrenzt ist die innere Ausnehmung 13 radial innen von dem Gewindebolzen 12 und radial außen von einer zwischen den Ausnehmungen 13 und 14 angeordneten Ringrippe 15. Die äußere Ausnehmung 14 ist radial innen von der Ringrippe 15 und radial außen von einer an den Kolbenboden 4 angeformten Ringwand 25 begrenzt, auf dessen radialer Außenseite der Feuersteg 6 und die Ringpartie 7 angeordnet sind.

Die kolbenbodenabgewandte Unterseite der Ringrippe 15 trägt die innere Kontaktfläche 2. In dem kolbenbodenabgewandten Endbereich der Ringwand 25 ist radial innen eine umlaufende Ausnehmung 16 eingeformt, die die äußere Auflagefläche 3 aufweist.

Wegen der in neueren Motoren gestiegenen Zünddrücke nehmen in den darin verwendeten gebauten Kolben, die aus einem Oberteil und einem Unterteil bestehen, wobei das Oberteil mit dem Unterteil verschraubt ist, auch die Kontaktpressung und die Relativbewegungen zwischen den in Kontakt miteinander stehenden Flächen des Oberteils und des Unterteils zu. Die Folgen sind ein erhöhter Reibverschleiß (fretting) der Kontaktflächen als Folge von Materialverschweißungen (microwelding) mit darauf zurückzuführenden, partiellen Materialauslösungen.

In Versuchen hat sich gezeigt, dass hiergegen Abhilfe geschaffen werden kann, wenn die Kontaktflächen 2 und 3 des Oberteiles 1 des Kolbens aufgeraut werden, wobei sich ein rillenförmiges Profil als besonders wirkungsvoll bei der Vermeidung des Verschleißes der Kontaktflächen 2, 3 erwiesen hat, das eine Rauheit zwischen R_{z} 10 und R_{z} 25, d.h., eine Profilstruktur aufweist, bei der die mittlere Abweichung des Profils von einer O-Achse in positive und negative Richtung 10 µm bis 25 µm beträgt. Hierbei kann das Profil der Kontaktflächen 2 und 3 die Form konzentrischer Rillen (siehe Norm DIN EN ISO 1302, bezeichnet mit dem graphischen Symbol C) mit einem Rillenabstand von 300 bis 1200 µm aufweisen, wie es in Fig. 1 dargestellt ist. Durch Drehen oder unter Verwendung eines Lasers ist dieses Profil besonders einfach und preisgünstig herstellbar ist.

Möglich ist auch ein Profil mit einer Rillenform, die sich ebenfalls an die Norm DIN EN ISO 1302 anlehnt, und die mit dem graphischen Symbolen X (gekreuzte Rillen) oder dem graphischen Symbol R (Rillen in Form radial angeordneter Blätter) näher bezeichnet wird.

Fig. 2 zeigt das Oberteil 17 eines gebauten Kolbens, das sich von dem in Fig. 1 dargestellten Oberteil 1 dadurch unterscheidet, dass es auf der kolbenbodenabgewandten Unterseite eine koaxial zur Kolbenachse 24 angeordnete Sacklochbohrung 18 mit einem Innengewinde 19 aufweist, in die eine Schraube zum Zusammenbau des Oberteils 17 mit einem in Fig. 2 nicht dargestellten Unterteil einschraubbar ist. Ein weiterer Unterschied zwischen den beiden Oberteilen 1 und 17 besteht darin, dass beim Oberteil 17 lediglich die kolbenbodenabgewandte, radial ausgerichtete, innere Kontaktfläche 20 der Ringrippe 21, die zwischen einer äußeren Ausnehmung 22 und einer inneren Ausnehmung 23 auf der Unterseite des Oberteils 17 angeordnet ist, ein Profil in Form konzentrischer Rillen aufweist, wie die zur Hälfte dargestellte Unteransicht des Oberteils 17 zeigt. Die in Fig. 2 dargestellte Profilierung von nur einer der beiden Auflageflächen ist bei geringeren Zünddrücken weniger hoch belasteter Kolben ausreichend.

Zur Vermeidung des Verschleißes der Kontaktflächen von Ober- und Unterteil eines gebauten Kolbens ist es auch möglich, eine oder mehrere kolbenbodenseitige, radial ausgerichtete Kontaktflächen des Kolbenunterteils mit der rillenförmigen Profilierung zu versehen, die die oben genannten Bemaßungen, d.h., Rauheit und Rillenabstand, und die oben angegebenen DIN-Formen aufweist.

### Bezugszeichenliste

- 1: Oberteil eines gebauten Kolbens
- 2: innere Kontaktfläche
- 3: äußere Kontaktfläche
- 4: Kolbenboden
- 5: Verbrennungsmulde
- 6: Feuersteg
- 7: Ringpartie
- 8, 9, 10: Ringnut
- 11: Kolbenachse
- 12: Gewindebolzen
- 13: innere Ausnehmung
- 14: äußere Ausnehmung
- 15: Ringrippe
- 16: Ausnehmung
- 17: Oberteil eines gebauten Kolbens
- 18: Sacklochbohrung
- 19: Innengewinde
- 20: innere Kontaktfläche
- 21: Ringrippe
- 22: äußere Ausnehmung
- 23: innere Ausnehmung
- 24: Kolbenachse
- 25: Ringwand

## Patentansprüche

1. Oberteil (1, 17) eines gebauten Kolbens
- mit einem Kolbenboden (4),
- mit einer in kolbenbodenabgewandte Richtung an den Kolbenboden (4) angeformten Ringwand (25), auf deren radialer Außenfläche eine Ringpartie (7) angeordnet ist,
- mit einer in die kolbenbodenabgewandte Unterseite eingeformten, ringförmigen, äußeren Ausnehmung (14, 22), die radial außen von der Ringwand (25) und radial innen von einer an die Unterseite des Oberteils (1, 17) angeformten Ringrippe (15, 21) begrenzt wird,
- mit einer auf der Unterseite der Ringrippe (15, 21) angeordneten, radial ausgerichteten, inneren Kontaktfläche (2, 20), und
- mit einer auf der Unterseite der Ringwand (25) angeordneten, radial ausgerichteten, äußeren Kontaktfläche (3),
- wobei die innere Kontaktfläche (2, 20) ein rillenförmiges Profil mit einer gemittelten Rautiefe zwischen R_{z} 10 und R_{z} 30 aufweist,
**dadurch gekennzeichnet,**
- **dass** das Profil der inneren Kontaktfläche (2, 20) die Form konzentrisch angeordneter Rillen mit einem Rillenabstand zwischen 300 µm und 1200 µm hat,
- **dass** neben der inneren Kontaktfläche (2, 20) auch die äußere Kontaktfläche (3) ein rillenförmiges Profil mit einer gemittelten Rautiefe zwischen R_{z} 10 und R_{z} 30 aufweist, wobei das Profil die Form konzentrisch angeordneter Rillen mit einem Rillenabstand zwischen 300 µm und 1200 µm hat.

## Claims

1. Upper part (1, 17) of a composite piston,
- with a piston crown (4),
- with a ring wall (25) which is formed onto the piston crown (4) in the direction facing away from the piston crown, on the radial outer surface of which ring wall a ring belt (7) is disposed,
- with a ring-shaped outer recess (14, 22) formed into the underside facing away from the piston crown, the recess being delimited radially on the outside by the ring wall (25), and radially on the inside by a ring rib (15, 21) formed onto the underside of the upper part (1, 17),
- with an inner contact surface (2, 20) disposed on the underside of the ring rib (15, 21) and oriented radially, and
- with an outer contact surface (3) disposed on the underside of the ring wall (25) and oriented radially,
- wherein the inner contact surface (2, 20) has a groove-shaped profile having an average roughness depth between R_{z} 10 and R_{z} 30,
**characterized in that**
- the profile of the inner contact surface (2, 20) has the shape of concentrically disposed grooves having a groove spacing between 300 µm and 1200 µm,
- in addition to the inner contact surface (2, 20), the outer contact surface (3) also has a groove-shaped profile having an average roughness depth between R_{z} 10 and R_{z} 30, wherein the profile has the shape of concentrically disposed grooves having a groove spacing between 300 µm and 1200 µm.

## Revendications

1. Pièce supérieure (1, 17) d'un piston assemblé,
- avec un fond de piston (4),
- avec une paroi annulaire (25) formée au niveau du fond de piston (4) dans la direction opposée au fond de piston, sur la surface extérieure radiale de laquelle est disposée une partie annulaire (7),
- avec un évidement (14, 22) extérieur de forme annulaire, formé dans le côté inférieur opposé au fond de piston, lequel évidement est délimité radialement côté extérieur par la paroi annulaire (25) et radialement à l'intérieur par une nervure annulaire (15, 21) formée au niveau du côté inférieur de la partie supérieure (1, 17),
- avec une surface de contact intérieure (2, 20) disposée sur le côté inférieur de la nervure annulaire (15, 21), orientée de manière radiale, et
- avec une surface de contact extérieure (3) disposée sur le côté inférieur de la paroi annulaire (25), orientée de manière radiale,
- dans laquelle la surface de contact intérieure (2, 20) présente un profil en forme de rainure avec une rugosité moyenne comprise entre R_{z} 10 et R_{z} 30,
**caractérisée en ce**
- **que** le profil de la surface de contact intérieure (2, 20) a la forme de rainures disposées de manière concentrique avec un espacement entre les rainures compris entre 300 µm et 1 200 µm,
- **qu'**à côté de la surface de contact intérieure (2, 20), la surface de contact extérieure (3) présente également un profil en forme de rainure avec une rugosité moyenne comprise entre R_{z} 10 et R_{z} 30, dans laquelle le profil a la forme de rainures disposées de manière concentrique avec un espacement entre les rainures compris entre 300 µm et 1200 µm.
